# NEW EUROPEAN PATENT SPECIFICATION

(11) **EP 1 768 600 B2**
(45) Date of publication and mention of the opposition decision: **27.11.2013**
(45) Mention of the grant of the patent: 29.09.2010
(21) Application number: 05755145.9
(22) Date of filing: 28.06.2005
(51) Int. Cl.: A61C 17/32, A61C 17/22, H02P 7/00

(54) **POWER TOOTHBRUSH WITH ADJUSTABLE OPERATION**
ELEKTRISCHE ZAHNBÜRSTE MIT EINSTELLBAREM BETRIEB
BROSSE A DENTS ELECTRIQUE A FONCTIONNEMENT REGLABLE

(30) Priority: 30.06.2004 US 584760 P
(43) Date of publication of application: 04.04.2007
(60) Divisional application: 10164615.6
(73) Proprietor: Koninklijke Philips N.V., 5656 AE Eindhoven (NL)
(72) Inventor: HALL, Scott E., Briarcliff Manor, NY 10510-8001 (US); BAYEH, Daniel, Briarcliff Manor, NY 10510-8001 (US); LILLEY, Ronald C., Briarcliff Manor, NY 10510-8001 (US)
(74) Representative: Wolfs, Marc Johannes Maria
(86) International application number: PCT/IB2005/052141
(87) International publication number: WO 2006/003617

(56) References cited:
- EP-A2- 0 435 329
- EP-A2- 1 096 660
- WO-A-2005/058188
- WO-A1-95//33419
- WO-A1-99//57672
- WO-A1-2004//001948
- WO-A1-2004//008626
- DE-A1- 2 848 749
- DE-U1-202005 003 516
- US-A- 5 000 684
- US-A- 5 189 751
- US-A- 5 263 218
- US-A- 5 378 153
- US-A- 5 613 259
- US-A1- 2003 115 694
- US-A1- 2005 120 496

## Description

The invention generally relates to power toothbrushes and more specifically concerns a system for adjusting the operation of the toothbrush by adjusting the amplitude of the brush motion, as disclosed in for example US 5613259.

The operational parameters of a power toothbrush, in particular, the frequency of the reciprocal motion of the brush portion of the toothbrush and the amplitude of the motion are typically established and set by the manufacturer prior to sale of the toothbrush. In those toothbrushes which are resonant systems, the operating frequency of the toothbrush is typically set at or near the resonant frequency of the toothbrush.

The amplitude of a power toothbrush established by the manufacturer may, however, not be optimal for a particular toothbrush and/or a particular user. A somewhat different amplitude than that established by the manufacturer may often be desirable to provide a maximum response and a preferred sense/feel by a particular user. Actual results from use of the toothbrush may also vary depending upon the particular amplitude of toothbrush motion. While amplitude may be adjusted by changing the power supplied to the motor, this approach has practical limitations, due to magnetic saturation in the motor and battery capacity.

It is noted that WO 2005/058188 relates to a toothbrush wich is driven in a manner to produce a periodic change or variation in amplitude of a brushhead portion (which includes the bristles and the bristle plate) of the toothbrush during operation thereof. In particular, the toothbrush known from WO 2005/058188 comprises a resonant drive system, wherein the drive system includes a circuit for changing the driving frequency relative to a center frequency to produce a periodic change of amplitude of the brushhead portion. The center frequency as mentioned may be chosen such as to be offset from the resonant frequency, and the frequency deviation of the driving frequency may be in a predetermined range from the center freqeuency.

It is desirable to be able to change the amplitude of the brush after it leaves the manufacturer to optimize performance and/or the sense of cleansing, without directly adjusting the power.

Accordingly, the present invention is according to claim 1.

Figure 1 shows a power toothbrush with which the present invention can be used.

Figure 2 is a block diagram showing an embodiment of a tunable toothbrush

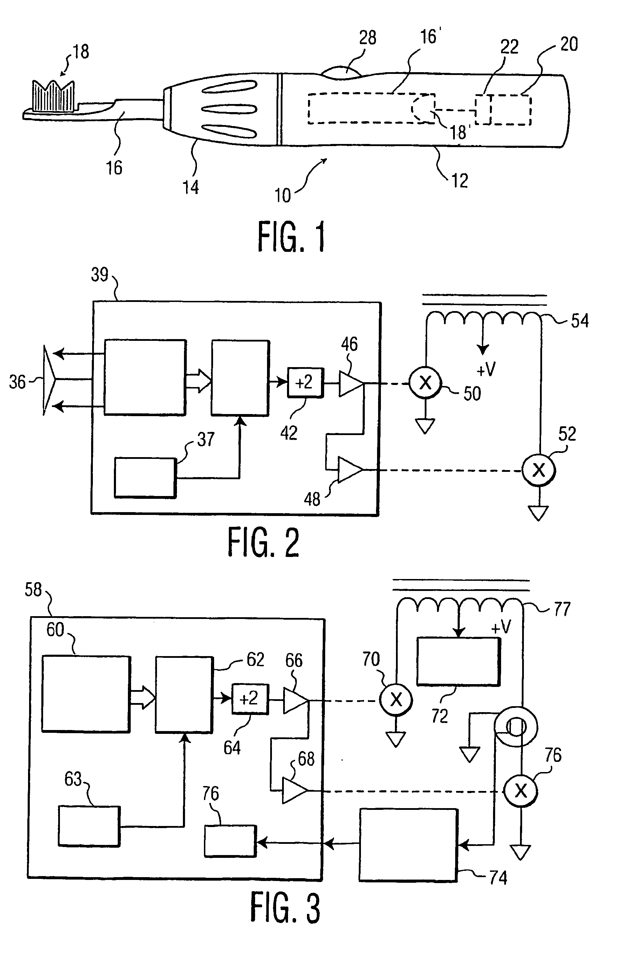

which is not part of the claimed subject matter. Figure 3 is a block diagram of the embodiment of the tunable toothbrush of the present invention.

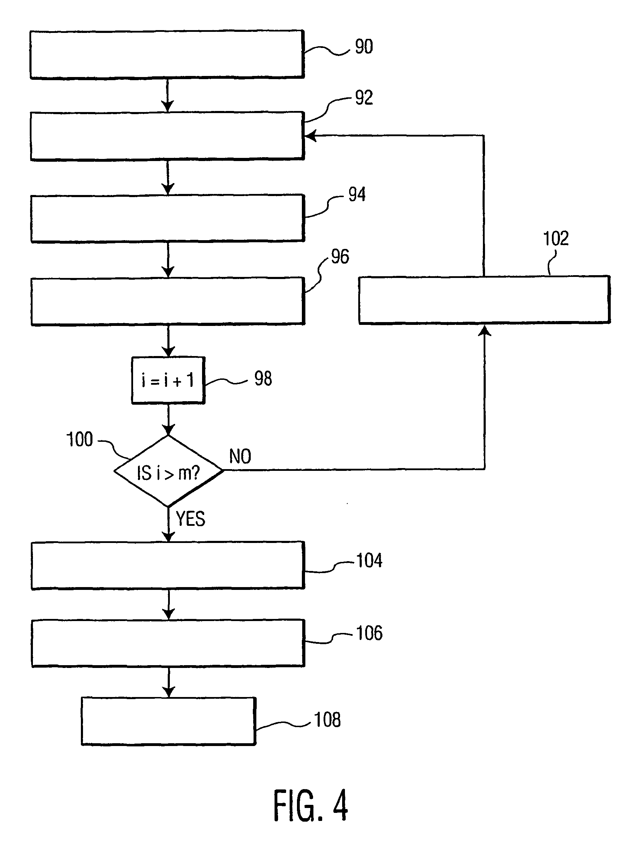

Figure 4 is a flow chart for a software program used in the embodiment of Figure 3.

Figure 1 shows a power toothbrush 10. As an example, power toothbrush 10 includes a handle portion 12 and a head portion 14 attached to the handle portion. The handle portion includes a stator 16' which is part of the motor for the toothbrush and includes a drive coil 18'. The motor is driven by a drive signal produced by a signal source 20, which includes switching circuit 22.

Head portion 14 typically includes a stem portion 16 and a brush portion 18 which is driven by operation of the motor. Operating an on/off switch 28 results in the brush portion 18 moving at a selected frequency and amplitude.

In the present invention, the operation of the toothbrush 10 is adjusted by changing the operating frequency of the toothbrush, which in the embodiments shown and described results in a change in amplitude of the brush motion, as described in more detail below. Figure 2 shows a manual embodiment of a frequency adjusting system which is not part of the claimed invention. In the manual embodiment, the user operates a rocker switch 36 to change the operating frequency of the toothbrush through the action of a microprocessor 39. The action of rocker switch 36 is sensed by an up/down counter 38 to determine the amount of increase or decrease of the frequency of the signal to be provided by timer 40. The up/down counter 38 loads timer 40, to which is applied a clock signal 37 which provides the initial frequency of operation of the appliance. The output of timer 40 is sent to a divide-by-two circuit 42 which is used to produce a square wave, which is then applied to inverters 46 and 48. The output of inverters 46, 48 is applied to FETs 50 and 52 which control the application of current to stator coil 54 of motor 16. Other electrical switches, such as bipolar transistors, could be used in place of the FETs.

By operating rocker switch 36, a change of operating frequency of the toothbrush is produced which in turn affects the amplitude of the brush motion. The user operates the rocker switch until an optimal "feel" or other desired result, occurs. Each operation of the rocker switch will alter the frequency of operation by a selected amount. The frequency selected by the user may be higher or lower than the preset frequency and may be higher or lower than the actual resonant frequency of the toothbrush. In the embodiment shown, the user can operate the frequency adjustment system at his/her convenience, even during brushing, to adjust the amplitude to a preferred optimal value. Typically, as indicated above, this value will be different than the frequency set by the manufacturer.

It is possible, however, to limit the ability of the user to change the frequency, and hence the amplitude, to some extent, such as by providing a timer which must expire prior to the user being able to change the frequency again. The timer could be, for instance, set to limit the ability of the user to change the frequency to once or perhaps twice during a normal brushing event, which is typically two minutes.

Figure 3 is a block diagram showing the embodiment of the invention, specifically, an automatic toothbrush frequency/amplitude adjustment system. In general in this embodiment, when the user turns the toothbrush on, a system is initiated which determines the resonant frequency of the toothbrush. This is done by sweeping through a series of frequencies, the range of which includes the value of the resonant frequency of the toothbrush. Once the resonant frequency is determined by this sweeping of frequencies, the actual operating frequency for the toothbrush is produced by including an offset from the determined resonant frequency. This value of frequency offset is established by the manufacturer. This setting of the operating frequency occurs each time the user turns on the toothbrush. Hence, changes in the resonant frequency of the toothbrush over time can be automatically accommodated.

Referring now to Figure 3, which shows the automatic adjustment system, including a microprocessor 58, a timing register 60 in the microprocessor is first initialized. The timing register 60 then preloads a timer 62 which is also responsive to a clock 63. The first frequency value established by the timing register is typically the lowest frequency value in the "sweep" of frequencies, although the sweep could occur from highest frequency to the lowest frequency as well. The output of timer 62 (initially the lowest frequency) is then applied to a divide-by-two circuit 64 which produces a square wave, which is applied to inverting circuits 66 and 68.

The output from the inverters is then applied to FETs 70, 76 which produce a current which is applied to the stator coil 77 for a short selected time, *e*.*g*. 1/10^{th} second. The current in the coil is sensed at 72 and the phase shift is measured at 74. As the frequency values move through the resonance frequency of the brushhead, the time necessary for the current to reverse will change. The term "phase shift" here refers to the relationship between the voltage drive (the square wave signal) and the zero crossing of the current waveform. This value of phase shift as defined above is applied to RAM 76 in the microprocessor, providing a first value in a table of phase values. The timing register 60 is then changed by a specific frequency value and the process is repeated, until a table of phase shift values is established. When the last frequency in the preselected "sweep" of frequencies through a selected range is used, and the table is complete, the resonant frequency is determined. The resonant frequency is associated with the minimum value of phase shift in the table. The operating frequency is then set, *i*.*e*. established, using the offset frequency value determined by the manufacturer. This resulting operating frequency value is then used to set the timing register 60 and the toothbrush is set to run for the specified amount of time (time for brushing).

Figure 4 is a flow chart of the software program in microprocessor 58 for control of the automatic operation of the appliance. First, timing register 60 is initialized, as shown in block 90. The timing register 60 will initially be set at the first, *i*.*e*. lowest, frequency in the frequency sweeping range (although it could be the highest, as indicated above) to determine the resonant frequency of the toothbrush. This value is then used to preload the timer 62 as shown in block 92. The stator of the motor is then run for a selected number (n) cycles using the first frequency value, as shown at block 94.

The phase shift value resulting from this first frequency of operation is then captured and stored in RAM 76 as shown at block 96. The frequency is then incremented by one step. This is indicated at block 98, where the loop index or value (i) has its value incremented by one, each time through the loop. This new loop value of (i) is compared then to a value (m), which is the total number of frequency steps in the frequency sweep process. This is shown at block 100. If the new value of (i) is not greater than (m), then timing register 60 is decremented, establishing a new preload value for the timer 62, as shown in block 102.

This process is repeated, building a table of phase shift values in RAM, until (i) is greater than (m). At this point, the resonant frequency of the toothbrush system is determined by ascertaining from the table in RAM the lowest value of the phase shift and correlating it with the associated frequency of operation. The preselected offset frequency set by the manufacturer is then used to establish the run timing value for the toothbrush, as shown at block 104. That value is used to set the timing register at block 106. Once the timer is set from the timing register, the appliance is then run for the time of the event, i.e. the preset time for brushing, in accordance with the established frequency value as shown at block 108.

Accordingly, a system has been described for adjusting the operation of a power toothbrush, both manually and automatically, by changing the frequency of the toothbrush.

## Claims

1. A power toothbrush (10) comprising an automatic system for changing the amplitude of motion of a brush portion of the power toothbrush (10), comprising:
- a drive system (70, 76, 77) of the power toothbrush for operating the toothbrush (10) at a particular frequency to produce a resulting amplitude;
- a system (72, 74) for determining the resonant frequency of the toothbrush at a selected time following initiation of operation of the toothbrush by a user; and
- a frequency adjustment system (58), which controls the setting of the operating frequency of the toothbrush at a value which is offset by a preselected amount from the determined resonant frequency, the preselected amount is established by the manufacturer.

2. The power toothbrush of claim 1 wherein the resonant frequency determination occurs approximately upon initiation of operation of the toothbrush.

3. The power toothbrush of claim 1 wherein the resonant frequency determining system includes a microprocessor, under program control, for determining phase shift values of current applied to a motor portion of the drive system for a range of successive frequency values which includes the resonant frequency, and for selecting the resonant frequency of the toothbrush which is associated with a minimum phase shift value.

4. The power toothbrush of claim 1, wherein the set operating frequency is higher than the resonant frequency.

## Patentansprüche

1. Elektrische Zahnbürste (10) mit einem automatischen System zum Ändern der Amplitude der Bewegung eines Bürstenteils der elektrischen Zahnbürste (10), wobei das System Folgendes umfasst:
- ein Antriebssystem (70, 76, 77) der elektrischen Zahnbürste zum Betreiben der Zahnbürste (10) mit einer bestimmten Frequenz zum Erzeugen einer resultierenden Amplitude;
- ein System (72, 74) zum Bestimmen der Resonanzfrequenz der Zahnbürste zu einem selektierten Zeitpunkt nach Einschaltung der Zahnbürste durch einen Benutzer; und
- ein Frequenzeinstellsystem (58), das die Einstellung der Betriebsfrequenz der Zahnbürste auf einen Wert steuert, der um einen vorher selektierten Betrag von der bestimmten Resonanzfrequenz abweicht, wobei der vorher selektierte Betrag durch den Hersteller eingestellt wird.

2. Elektrische Zahnbürste nach Anspruch 1, wobei die Resonanzfrequenzfestlegung etwa bei Auslösung des Betriebs der Zahnbürste auftritt.

3. Elektrische Zahnbürste nach Anspruch 1, wobei das System zur Festlegung der Resonanzfrequenz einen Mikroprozessor aufweist, unter Programmsteuerung, zum Bestimmen von Phasenverschiebungswerten des einem Motorteil des Antriebssystems zugeführten Stroms für eine Skala aufeinander folgender Frequenzwerte, worunter die Resonanzfrequenz, und zum Selektieren der Resonanzfrequenz der Zahnbürste, die mit einem minimalen Phasenverschiebungswert assoziiert ist.

4. Elektrische Zahnbürste nach Anspruch 1, wobei die eingestellte Betriebsfrequenz höher ist als die Resonanzfrequenz.

## Revendications

1. Brosse à dents électrique (10) comprenant un système automatique qui est destiné à changer l'amplitude de mouvement d'une partie de brosse de la brosse à dents électrique (10), comprenant :
- un système d'entraînement (70, 76, 77) de la brosse à dents électrique qui est destiné à faire fonctionner la brosse à dents (10) à une fréquence particulière afin de produire une amplitude consécutive ;
- un système (72, 74) qui est destiné à déterminer la fréquence de résonance de la brosse à dents à un moment sélectionné après le début du fonctionnement de la brosse à dents par un utilisateur ; et
- un système d'ajustement de fréquence (58) qui commande le réglage de la fréquence de fonctionnement de la brosse à dents à une valeur qui est décalée d'une quantité présélectionnée par rapport à la fréquence de résonance déterminée, la quantité présélectionnée étant établie par le fabricant.

2. Brosse à dents électrique selon la revendication 1, dans laquelle la détermination de la fréquence de résonance se produit à peu près au début du fonctionnement de la brosse à dents.

3. Brosse à dents électrique selon la revendication 1, dans laquelle le système de détermination de la fréquence de résonance comprend un microprocesseur, sous la commande du programme, pour déterminer des valeurs de décalage de phase du courant qui est appliqué à une partie de moteur du système d'entraînement pour une plage de valeurs de fréquence successives qui comprend la fréquence de résonance et pour sélectionner la fréquence de résonance de la brosse à dents qui est associée à une valeur de décalage de phase minimum.

4. Brosse à dents électrique selon la revendication 1, dans laquelle la fréquence de fonctionnement réglée est supérieure à la fréquence de résonance.
